(19) Europäisches Patentamt

European Patent Office

Office européen des brevets

(11) EP 0 906 925 A2

## (12) EUROPEAN PATENT APPLICATION

(43) Date of publication:
07.04.1999 Bulletin 1999/14

(21) Application number: 98118697.6

(22) Date of filing: 02.10.1998

(51) Int. Cl.$^6$: **C08F 220/18**, C08F 220/04, C08F 246/00, C09D 157/00, C09D 133/06, C09D 133/02, C08F 220/28, C09D 133/14

(84) Designated Contracting States:
AT BE CH CY DE DK ES FI FR GB GR IE IT LI LU MC NL PT SE
Designated Extension States:
AL LT LV MK RO SI

(30) Priority: 03.10.1997 JP 288021/97
24.02.1998 JP 60564/98
10.06.1998 JP 162676/98

(71) Applicant:
Kabushiki Kaisha Toyota Chuo Kenkyusho
Aichi-gun, Aichi-ken, 480-1192 (JP)

(72) Inventors:
• Nakamura, Hiroshi,
c/o K. K. Toyota Chuo Kenkyusho
Aichi-gun, Aichi-ken 480-1192 (JP)
• Tachi, Kazuyuki,
c/o K. K. Toyota Chuo Kenkyusho
Aichi-gun, Aichi-ken 480-1192 (JP)

(74) Representative:
Blumbach, Kramer & Partner GbR
Radeckestrasse 43
81245 München (DE)

## (54) Resin for aqueous paint

(57)     The present invention relates to a resin for an aqueous paint which can reduce dependence of viscosity on the concentration of a paint, and an aqueous paint containing such a resin. The resin for a paint of the present invention is a resin constituted by copolymerizing at least one hydrophilic ethylenic monomer and at least one hydrophobic ethylenic monomer. An aqueous paint containing the resin for a paint of the present invention exhibits pseudo-plastic flow in a condition wherein the concentration of a paint is kept to be low regardless of variation (typically, increase) in the concentration of a paint in coating or the concentration distribution of a paint.

EP 0 906 925 A2

**Description**

BACKGROUND OF THE INVENTION

Field of the Invention

The present invention relates to a synthetic resin that preferably may be used in a paint. To a preferred aspect, the present invention relates to a resin which is used as a base resin (main component) for an aqueous paint. Also, the present invention relates to an aqueous paint containing a resin which can reduce dependence of paint viscosity on concentration.

Description of the Related Art

It is particularly important to control the viscosity of a paint for obtaining a coated film having an excellent appearance. Particularly when an aqueous paint (including what are known as water-soluble resin paint, dispersion paint and emulsion paint, hereinafter, the same) is applied by spraying, low viscosity (apparent viscosity in non-Newtonian fluid) is required for excellent atomization of the paint. On the other hand, high viscosity is required so that sagging, etc., of a paint in coating is prevented. Namely, for accomplishing such requirements, it is necessary that the aqueous paint exhibits pseudo-plastic flow (flow in which viscosity reduces with increases in shear rate or shear stress) in lower concentration of a paint (concentration of non-volatile components such as a resin, pigment and the like). Further, for maintaining the flow (leveling) property of a paint after spraying at a high level, it is necessary in such an aqueous paint that increases in viscosity with increases in the concentration of a paint after spraying is low; that is, dependence of the viscosity of a paint on the concentration of the paint is low.

Therefore, previously, various methods have been proposed for controlling the viscosity of an aqueous paint. For example, Japanese Laid-Open Patent Publication No. 56-157358 describes a method in which the viscosity of a paint is controlled using a core-shell emulsion as a base resin of the paint, and Japanese Laid-Open Patent Publication No. 63-111976 proposes a method in which the viscosity of a paint is controlled by using water-soluble acrylic resin and resin particles. Using these methods, pseudo-plastic flow is exhibited in a lower concentration range, excellent atomization is obtained, and sagging in coating can be prevented.

An aqueous paint prepared by using the above-described resin for coating as a base resin can exhibit pseudo-plastic flow in a lower concentration of a paint; however, the viscosity of the paint increases linearly with increases in the concentration of a paint. Therefore, when coating conditions, particularly, temperature and humidity conditions in a spraying booth are changed, the flow property of a paint changes according to the object to be coated or the conditions of the paint shop. As a result, a coating film having an excellent appearance could not be consistently obtained. Further, when a large sized object such as an automobile body was to be coated, concentration distribution over the object was apt to extend, the flow property of the paint after spraying became non uniform, and it was difficult to obtain a coated film having excellent appearance.

SUMMARY OF THE INVENTION

An object of the present invention is to solve one or more of the above-described problems of known aqueous paints, and provides a resin for an aqueous paint which can reduce the dependence of the viscosity of the aqueous paint on concentration.

The present inventors have found that an aqueous dispersion obtained by dispersing a resin synthesized by copolymerization of a hydrophilic ethylenic monomer containing a hydrophilic group which dissolves and disperses in water and a hydrophobic ethylenic monomer containing a hydrophobic group which effects mutual association in water exhibits pseudo-plastic flow even in a condition wherein the concentration of the resin is low. Further, viscosity remains approximately constant in spite of increases in the concentration.

The present invention preferably provides a resin for an aqueous paint synthesized by copolymerization of at least one hydrophilic ethylenic monomer and at least one hydrophobic ethylenic monomer.

In a preferred resin, the solubility parameter or $\delta$ sp of at least one hydrophilic ethylenic monomer to be copolymerized is 9.0 or more, and the maximum $\delta$ sp value of at least one hydrophobic ethylenic monomer to be copolymerized is less than the minimum $\delta$ sp value of at least one hydrophilic ethylenic monomer to be copolymerized by 1.0 or more.

In an aqueous resin dispersion containing such resin for a paint, hydrophobic groups associate with each other by hydrophobic interaction and pseudo-plastic flow is exhibited within a lower concentration range of the paint. Further, when the resin concentration increases, or the amount of water is reduced, the association of hydrophobic groups decreases and the phase of the dispersion changes from an oil-in-water emulsion to a water-in-oil emulsion. By this, the increase in the viscosity of the dispersion with the increase in the concentration of a paint can be suppressed.

Accordingly, when used in an aqueous paint as a base resin, the resin may exhibit the following properties:

(1) Pseudo-plastic flow occurs by hydrophobic interaction in a condition in which the concentration of the resin in the aqueous medium is reduced to a certain extent by dilution or the like; and
(2) The viscosity can be maintained at approximately a constant level in case of variation (typically, an increase) of the concentration of the resin, which can occur in a coated film in coating process (including drying process).

Therefore, an aqueous paint is provided containing such resin as a base resin, wherein pseudo-plastic flow occurs at a lower concentration of the resin, and the viscosity of a coated film can be maintained at approximately constant level in spite of variations (typically, an increase) of the concentration of the resin or a distribution of concentration of the resin. By such an aqueous paint, an anti-sagging tendency of a paint on a coated surface and an excellent flow property can be simultaneously attained.

In a particularly preferable resin for a paint, at least one of the above-described hydrophobic ethylenic monomers is selected from hydrophobic ethylenic monomers having hydrocarbon groups containing 12 to 24 carbon atoms. In a more preferable resin for a paint, at least one of hydrophilic ethylenic monomer is an ethylenic monomer having at least one acidic group and/or an ethylenic monomer having at least one hydroxyl group.

Particularly recommended is a resin synthesized by copolymerizing such hydrophilic ethylenic monomers, and at least one of the above-described hydrophobic ethylenic monomer including a hydrocarbon group having 12 to 24 carbon atoms. Preferably, at least one of the other hydrophobic ethylenic monomers is different from the above-described hydrocarbon-containing monomer.

Further, a resin for a paint is provided having a carbon chain derived from an ethylenic monomer having at least one hydrocarbon group containing 12 to 24 carbon atoms and at least one hydrophilic group. As this type of resin for a paint, preferable are resins in which the ratio of the number of the above-described hydrophilic groups to the number of the above-described hydrocarbon groups (number of the above-described hydrophilic groups/number of the above-described hydrocarbon groups) is from 2 to 20.

An aqueous resin dispersion containing such resin for a paint have several advantageous properties. For example, when the concentration of such resin is low, the concentration of the aqueous medium is high; therefore, hydrocarbon groups containing 12 to 24 carbon atoms, which are hydrophobic groups, associate by hydrophobic interaction. By this, pseudo-plastic flow can be imparted to an aqueous dispersion containing the resin for a paint. On the other hand, when the concentration of such resin is high, the association of hydrocarbon groups containing 12 to 24 carbon atoms decreases. By this, increase in viscosity is suppressed even when the concentration of a resin of the dispersion increases. As described above, a resin dispersion containing such resin for a paint has a concentration range in which dependence of viscosity on concentration is reduced.

Therefore, when an aqueous paint is prepared using the above-described resin, the paint contains a lot of water and the concentration of a resin is low during spraying. However, since pseudo-plastic flow is imparted by this resin, excellent atomization is obtained and in addition, sagging of the paint in coating is prevented. Further, even if the concentration of the resin increases during the drying process after spraying, the resulting flow property is excellent since any increase in viscosity is suppressed by this resin. Therefore, according to an aqueous paint using the above-described resin, a stable flow property can be exhibited and a coated film having a consistently excellent appearance can be obtained in case of variation in coating conditions, particularly temperature and humidity conditions. Even when a large scale object is coated, a coated film having excellent appearance can be obtained since flow property becomes relatively uniform.

BRIEF EXPLANATION OF THE DRAWINGS

FIG. 1 is a graph showing variations in viscosity of four kinds of dispersions with variation of the concentration of resins, the aqueous dispersions being prepared so that they contain the resins for a paint obtained in Examples 1 and 2 and Comparative Examples 1 and 2, respectively.
FIG. 2 is a graph showing variations in viscosity of four kinds of dispersions with variation of the concentration of resins, the aqueous dispersions being prepared so that they contain the resins for a paint obtained in Examples 3 through 5 and Comparative Example 3, respectively.
FIG. 3 is a graph showing variations in viscosity of three kinds of dispersions with variation of the concentration of resins, the aqueous dispersions being prepared so that they contain the resins for a paint obtained in Examples 8 through 10, respectively.
FIG. 4 is a graph showing variations in viscosity of three kinds of dispersions with variation of the concentration of resins, the aqueous dispersions being prepared so that they contain the resins for a paint obtained in Examples 11 through 13, respectively.

FIG. 5 is a graph showing variations in viscosity of three kinds of dispersions with variation of the concentration of resins, the aqueous dispersions being prepared so that they contain the resins for a paint obtained in Example 14 and Comparative Examples 7 and 8, respectively.

## DETAILED DESCRIPTION OF THE INVENTION

The resin for a paint has a carbon chain derived from an ethylenic monomer containing a hydrophobic group (for example, a hydrocarbon group containing 12 to 24 carbon atoms) and a hydrophilic group.

In the present specification, the carbon chain derived from an ethylenic monomer preferably comprises a carbon chain made of carbon-carbon bonds obtained by polymerization of an ethylenic monomer, and a carbon chain obtained by bonding such a carbon chain by chemical bonds formed by further polymerization or other chemical reactions.

Also, in the present specification, the ethylenic monomer preferably is a compound having a polymerizable unsaturated double bonds and contains a macro monomer (a reactive polymer having at least one ethylenic double bond). The carbon chain derived from the ethylenic monomer may be linear or branched.

While not wishing to be bound by theory, the hydrophobic group (for example, a hydrocarbon group containing 12 to 24 carbon atoms) is believed to enable the resin to associate when the concentration of the resin of the present invention is low in an aqueous medium (when the concentration of an aqueous medium is high), and to reduce the association of the resin when the concentration of the resin is high (when the concentration of an aqueous medium is low). Preferable hydrophobic groups are linear or branched hydrocarbon groups containing 12 to 24 carbon atoms. When the number of carbons in such a hydrocarbon group is less than 12, association of the hydrocarbons is difficult in an aqueous medium. When the number of carbons is over 24, dispersibility into an aqueous medium remarkably decreases. A hydrocarbon group containing 12 to 18 carbon atoms is particularly preferable as the above-described hydrophobic group.

The hydrophilic group is believed to enable the resin for a paint to be dispersed in an aqueous medium. As the hydrophilic group, acidic groups such as a carboxyl group, a sulfonic group or the like, a hydroxyl group, and hydrogen-bonding groups are preferable. As the hydrophilic group, it is preferable to use at least one of the acidic groups, hydroxyl group and hydrogen-bonding groups. These hydrophilic groups may be used alone or in combinations of two or more.

First, the above-described ethylenic monomer which can be used for preparing the resin for a paint of the present invention will be described.

Accordingly, hydrophilic ethylenic monomer is an important component and plays a role in dispersing the resin into an aqueous medium stably. Typically, one or more hydrophilic ethylenic monomers is a monomer in which the solubility parameter or $\delta$ sp value is 9.0 or more. Herein, the solubility parameter or $\delta$ sp value is a parameter indicating cohesive energy between molecules, and is represented by the following formula (1).

$$\delta \text{ sp} = ((\Delta Hv - RT)V)^{1/2} \tag{1}$$

$\Delta Hv$: heat of vaporization at temperature T(K)
R: gas constant
T: absolute temperature
V: molecular volume

More specifically, Small (Journal of Applied Chemistry, Vol. 69, p2809 (1953)) and Hoy (Journal of Paint Technology. Vol. 42, No. 541, p76 (1970)) disclose that $\delta$ sp can be calculated from the molar-volume cohesion of an atom group using formula (2).

$$\delta \text{ sp} = \rho \ (\Sigma G) \ /M \tag{2}$$

$\rho$: density
G: molar-volume cohesion
M: molecular weight

A monomer having a solubility parameter or $\delta$ sp value of 9.5 or more is particularly preferable as the hydrophilic ethylenic monomer used for producing a resin for paint.

Examples of the hydrophilic ethylenic monomer used for producing such resins for paint include hydrophilic group-containing ethylenic monomers, such as an acidic group-containing ethylenic monomer, a hydroxyl group-containing ethylenic monomer, a hydrogen-bonding group-containing ethylenic monomer and the like, and ethylenic monomers having one or more hydrocarbon groups containing a small number of carbon atoms. In the present invention, it is preferable to use acidic group-containing ethylenic monomers and hydroxyl group-containing ethylenic monomers alone or in combinations of two or more.

As the acidic group in the acidic group-containing ethylenic monomer, a carboxyl group, a sulfonic group and the like are preferred.

Examples of the carboxyl group-containing monomer include acrylic acid, methacrylic acid, itaconic acid, maleic acid, fumaric acid, crotonic acid, isocrotonic acid, 3-vinylsalicylic acid, 3-vinylacetylsalicylic acid and the like.

Examples of the sulfonic group-containing monomer include p-vinylbenzenesulfonic acid, 2-acrylamidepropanesulfonic acid, styrenesulfonic acid and the like. The acidic group-containing ethylenic monomer may be a half ester, half amide and half thioesters of dibasic acid monomers (maleic acid, fumaric acid, itaconic acid and the like). The acidic group-containing ethylenic monomer may be used alone or in combinations of two or more.

The hydroxy group-containing ethylenic monomer is a monomer component which imparts to the present resin a hydrophilic part and is believed to enable the resin to be dispersed in an aqueous medium, and at the same time is a monomer component which imparts a portion that is cross-linked with a cross-linkage agent component in a paint when the paint is prepared using the present resin. Examples of the hydroxyl group-containing ethylenic monomer include 2-hydroxylethyl acrylate, 2-hydroxypropyl acrylate, 2-hydroxybutyl acrylate, 2-hydroxyethyl methacrylate, 2-hydroxypropyl methacrylate, 2-hydroxybutyl methacrylate, vinyl alcohol, allyl alcohol and the like. The hydroxyl group-containing ethylenic monomers can be used alone or in combinations of two or more.

Examples of the hydrogen-bonding group-containing ethylenic monomer include acrylamide, N,N-dimethylacrylamide, dimethylaminoethyl acrylate, dimethylaminoethyl methacrylate, ethyleneimine, vinylpyridine, vinyl amine, allylamine, vinyl alcohol, vinyl pyrrolidone and the like The hydrogen-bonding group-containing ethylenic monomer can be used alone or in combinations of two or more.

Examples of the ethylenic monomers having a hydrocarbon group containing a small number of carbon atoms include methyl acrylate, ethyl acrylate, n-propyl acrylate, methyl methacrylate and the like. The ethylenic monomers having hydrocarbon groups of a small number of carbon atoms can be used alone or in combinations of two or more.

On the other hand, the hydrophobic ethylenic monomer described herein is believed to allow the resin to exhibit pseudo-plastic flow when the concentration of the resin is low and to prevent increases in viscosity when the concentration of the resin increases in an aqueous medium. The hydrophobic ethylenic monomer of the present invention has the solubility parameter or $\delta$ sp value which is less than the hydrophilic monomer by 1.0 or more, if only a single hydrophilic monomer is utilized. If two or more hydrophilic monomers are utilized, the solubility parameter or $\delta$ sp value of the hydrophobic monomer is less than the $\delta$ sp value of all of the hydrophilic ethylenic monomers by 1.0 or more. In particular, an ethylenic monomer having an $\delta$ sp value of less than 9.0 is preferable as the hydrophobic monomer. When the difference between the maximum $\delta$ sp value of the hydrophobic ethylenic monomer and the minimum $\delta$ sp value of the above-described hydrophilic ethylenic monomer is less than 1.0, association between the hydrophobic groups is weak, and the pseudo-plastic flow in a lower concentration of a paint is not exhibited.

Examples of the hydrophobic ethylenic monomer include n-butyl acrylate, isobutyl acrylate, t-butyl acrylate, n-hexyl acrylate, 2-ethylhexyl acrylate, decyl acrylate, dodecyl acrylate, octadecyl acrylate, cyclohexyl acrylate, ethyl methacrylate, n-propyl methacrylate, n-butyl methacrylate, isobutyl methacrylate, t-butyl methacrylate, n-hexyl methacrylate, 2-ethylhexyl methacrylate, decyl methacrylate, dodecyl methacrylate, octadecyl methacrylate, cyclohexyl methacrylate and the like.

The hydrophobic ethylenic monomer which is particularly preferable is a hydrophobic ethylenic monomer having a hydrocarbon group containing 12 to 24 carbon atoms. Such a hydrocarbon group is believed to enable the present resin to associate when the concentration of the present resin is low (when the concentration of an aqueous medium as a solvent is high) and to reduce the association of the present resin when the concentration of the present resin is high (when the concentration of an aqueous medium is low) in an aqueous paint.

As "the hydrophobic ethylenic monomer having a hydrocarbon group containing 12 to 24 carbon atoms," an alkyl acrylate or an alkyl methcrylate including an allyl group containing 12 to 24 carbon atoms is preferable. Specific examples thereof include dodecyl (lauryl) acrylate, tridecyl acrylate, tetradecyl acrylate, pentadecyl acrylate, hexadecyl (cetyl) acrylate, heptadecyl acrylate, octadecyl (stearyl) acrylate, nonadecane acrylate eicosane acrylate, docosane acrylate. dodecyl (lauryl) methacrlate, tridecyl methacrylate, tetradecyl methacrylate, pentadecyl methacrylate, hexadecyl (cetyl) methacrylate, heptadecyl methacrylate, octadecyl (stearyl) methacrylate, nonadecane methacrylate, eicosane methacrylate, docosane methacrylate and the like. These hydrocarbon group-containing hydrophobic ethylenic monomers can be used alone or in combinations of two or more.

When such a resin is prepared, hydrophobic ethylenic monomers other than the above-described hydrophobic ethylenic monomer having a hydrocarbon group containing 12 to 24 carbon atoms may be copolymerized together in addition to the hydrophobic ethylenic monomer. This hydrophobic ethylenic monomer preferably will not substantially affect the viscosity behavior of the resin derived from the above-described hydrophobic ethylenic monomer having a hydrocarbon group, and can be used as a monomer component which is added to improve water resistance of a coated film. In doing so, this hydrophobic ethylenic monomer preferably is a component in which the $\delta$ sp value is lower than the minimum $\delta$ sp value of the above-described hydrophilic monomer by 1.0 or more and preferably has the $\delta$ sp value of less than 9.0.

Examples of the above-described hydrophobic ethylenic monomer include n-butyl acrylate, isobutyl acrylate, t-butyl acrylate, n-hexyl acrylate, 2-ethylhexyl acrylate, decyl acrylate, cyclohexyl acrylate, ethyl methacrylate, n-propyl methacrylate, n-butyl methacrylate, n-hexyl methacrylate, 2-ethylhexyl methacrylate, decyl methacrylate, cyclohexyl methacrylate and the like. The hydrophobic ethylenic monomers can be used alone or in combinations of two or more.

In particular, a resin for a paint which can improve water resistance of a coated film can be obtained by copolymerizing an acidic group-containing hydrophobic ethylenic monomer, a hydroxyl group-containing ethylenic monomer, the above-described hydrocarbon group-containing hydrophobic ethylenic monomer and a hydrophobic ethylenic monomers other than the above-described hydrocarbon group-containing hydrophobic monomer.

When the resin for a paint is prepared, other ethylenic monomers than those described above may be copolymerized in an amount which does not allow the resulting resin to flocculate or precipitate in an aqueous medium, in addition to the above-described components. Examples thereof include glycidyl methacryalte, styrene, methylstyrene, vinyltoluene, vinylpyridine, butadiene, isoprene, chloroprene, acrylonitrile, methacrylonitrile and the like.

The resin for a paint can be obtained as a copolymer synthesized by copolymerizing at least one of the above-described hydrophilic ethylenic monomers and at least one of the above-described hydrophobic ethylenic monomers (for example, the hydrophobic ethylenic monomer having a hydrocarbon group containing 12 to 24 carbon atoms). Namely, the resin for a paint of the present invention can be obtained as a copolymer having a unit derived from the hydrophilic ethylenic monomer and a unit derived from the hydrophobic ethylenic monomer.

In conducting copolymerization, the amount used for at least one of the above-described hydrophilic ethylenic monomers is preferably in the range from 10% by weight to 99% by weight based on the total amount of raw materials to be copolymerized. The range from 20% by weight to 95% by weight is more preferable. Therefore, corresponding to this use range, the amount used for at least one of the above-described hydrophobic ethylenic monomers is preferably in the range from 90% by weight to 1% by weight based on the total amount of raw materials copolymerized. The range from 80% by weight to 5% by weight is more preferable. When the amount used for at least one of the above-described hydrophilic ethylenic monomers is less than 10% by weight based on the total amount (namely, when the amount used for at least one of the above-described hydrophobic ethylenic monomers is over 90% by weight based on the total amount), water-dispersibility deteriorates because the hydrophilicity of the resulting resin decreases. Consequently, the resin may flocculate or precipitate in an aqueous medium. On the other hand, when the amount used for at least one of the above-described hydrophilic ethylenic monomers is over 99% by weight based on the total amount (namely, when the amount used for at least one of the above-described hydrophobic ethylenic monomers is less than 1% by weight based on the total mount), the hydrophobicity of the resulting resin decreases. Consequently, an aqueous paint containing such resin may not exhibit pseudo-plastic flow in lower concentrations.

Furthermore, when the above-described acidic group-containing bydrophobic ethylenic monomers and the above-described hydroxyl group-containing ethylenic monomers are used as the above-described hydrophilic ethylenic monomers, and these hydrophilic ethylenic monomers, hydrophobic ethylenic monomer having a hydrocarbon group containing 12 to 24 carbon atoms and hydrophobic ethylenic monomers other than the hydrocarbon group-containing hydrophobic ethylenic monomer are copolymerized together to prepare the resin, it is preferable that the acidic group-containing ethylenic monomer is used in an amount from 2 to 15% by weight based on the total amount of raw materials to be copolymerized and the hydroxyl group-containing ethylenic monomer is used in an amount from 5 to 30% by weight based on the total amount. More preferably, the acidic group-containing ethylenic monomer is used in an amount from 3 to 10% by weight based on the total amount and the hydroxyl group-containing ethylenic monomer is used in an amount from 10 to 25% by weight based on the total amount.

When the amount used for the acidic group-containing ethylenic monomer is less than 2% by weight, water-dispersibility is poor, and the resulting resin may flocculate or precipitate in an aqueous medium. On the other hand, when over 15% by weight, the hydrophilicity of the resulting resin becomes too high. Consequently, the water resistance of a coated filmmade of an aqueous paint containing this resin decreases.

When the amount used for the hydroxyl group-containing ethylenic monomer is less than 5% by weight, the curing property of a coated film made of an aqueous paint containing the resin is poor. On the other hand, when over 30% by weight the hydrophiticity of the resulting resin becomes too high. Consequently, the water resistance of a coated film made of an aqueous paint containing this resin decreases.

When the amounts of the acidic group-containing ethylenic monomer and hydroxyl group-containing ethylenic monomer are set in the above-described preferable ranges, the amount used for the above-described hydrocarbon group-containing hydrophobic ethylenic monomer is preferably from 1 to 20% by weight, and more preferably from 2 to 10% by weight, based on the total amount of raw materials to be copolymerized. The remaining percentage obtained by subtracting the proportions used for these monomers from the total proportion of raw materials to be copolymerized will be an amount used for hydrophobic ethylenic monomer other than the above-described hydrocarbon group-containing hydrophobic monomer.

Preferable copolymerization conditions for preparing the resin will be described below.

Such copolymers are obtained by polymerizing the above-described ethylenic monomer(s) in a reaction vessel in the presence of a hydrophilic solvent at a temperature from 50 to 150°C for 3 to 15 hours preferably using polymerization initiators such as azo compounds, organic peroxide and the like. The above-described macro-monomer may be a commercially available product (for example, various macro monomers are available from Toa Gosei Chemical Industry Co., Ltd.) or a desired monomer may be synthesized in advance. For example, the monomer may be obtained by adding a glycidyl group-containing ethylenic monomer to an acidic group-containing acrylic polymer.

Examples of the hydrophilic solvent that can be used in polymerization include methyl alcohol, ethyl alcohol, n-propyl alcohol, isopropyl alcohol, n-butyl alcohol, isobutyl alcohol, ethylene glycol monoethyl ether, ethylene glycol monomethyl ether, ethylene glycol mono n-butyl ether and the like. The hydrophilic solvents can be used alone or in combinations of two or more.

Examples of the azo compounds include 2,2'-azobisisobutyronitrile, 2,2'-azobis(2,4'-dimetylvaleronitrile), dimethyl-2,2'-azobisisobutyrate and the like. On the other hand, as the organic peroxide, benzoyl peroxide, t-butyl peroxy benzoate, t-butyl peroxy isobutyrate, t-butyl peroxy 2-ethylhexanoate, cumene hydroperoxide and the like can be used.

In carrying out the polymerization, copolymers in various forms can be obtained by previously known methods. A random copolymer and taper block copolymer can be obtained generally by charging two or more monomers in polymerization system. A block copolymer can be obtained generally by polymerizing one monomer then by charging another polymer. For graft copolymerization, it may be possible that a graft copolymerizable reactive polymer can be synthesized as a main chain or a side chain, and an ethylenic monomer is copolymerized which forms a side chain part or main chain on this polymer. Or a polymerizable double bond can be introduced in a part of a carbon chain (as a side chain or main chain) formed from an ethylenic monomer, and an ethylenic monomer which forms a side chain or main chain is copolymerized to this part. Alternatively, a carbon chain in a main chain part and a carbon chain in a side chain part may be chemically bonded by an ester bond, an ether bond or the like.

For example, when a graft copolymer is prepared composed of the above-described hydrophobic ethylenic monomer having a hydrocarbon group containing 12 to 24 carbon atoms and the above-described hydrophilic ethylenic monomer, a hydrophilic group may be placed on one of a main chain or a side chain and the hydrocarbon group may be placed on another side. Or a hydrophilic group and a hydrocarbon group may be placed on both the main chain and a side chain. Further, the above-described hydrocarbon group can also be imparted to a carboxyl group and/or a hydroxyl group in the resulting copolymer. Alternatively, a carboxyl group and the lee can be imparted by decomposing an alkyl ester bond and the like in the resulting copolymer. For imparting the above-described hydrocarbon group, an esterification reaction of a carboxyl group in a copolymer with a hydroxide or an amide compound containing the hydrocarbon group, an etherification reaction of a hydroxyl group in a copolymer with an epoxy compound (for example, alkylene oxide) or a carboxylic acid chloride compound containing a hydrocarbon group, and the like can be utilized.

When the above-described addition reaction of a hydrocarbon group is used, the resin can also be obtained by imparting the above-described hydrocarbon group to a carbon chain derived from an ethylenic monomer to which an acidic group and/or hydroxyl group is imparted but where a hydrocarbon group is not imparted.

That is, the above-described hydrocarbon group is imparted by an esterification reaction with a carboxyl group and/or an etherification reaction with a hydroxyl group in a copolymer obtained by polymerizing one or more acidic group-containing hydrophobic ethylenic monomers and/or one or more hydroxyl group-containing ethylenic monomers, without using the hydrophobic ethylenic monomer having a hydrocarbon group containing 12 to 24 carbon atoms.

In a like manner, the resin having a carboxyl group can also be obtained by the hydrolysis of an alkyl ester bond of a carbon chain derived from an ethylenic monomer to which a hydrocarbon group has been imparted but in which a carboxyl group has not been imparted.

Namely, a carboxyl group is imparted to a carbon chain by the hydrolysis reaction of an alkyl ester bond in a copolymer obtained by polymerizing a hydrocarbon group-containing ethylenic monomer or other ethylenic monomer, without using a carboxyl group-containing ethylenic monomer.

By any of these representative methods, the resin can be prepared in which at least one hydrocarbon group containing 12 to 24 carbon atoms and at least one hydrophilic group are imparted to a carbon chain derived from an ethylenic monomer is prepared.

Then, in the resin for a paint of the present invention in which at least one hydrocarbon group containing 12 to 24 carbon atoms and at least one hydrophilic group are imparted to a carbon chain derived from an ethylenic monomer, the ratio of the number of the hydrophilic group to the number of the hydrocarbon group carted to the carbon chain (number of hydrophilic group/number of hydrocarbon group) is preferably in the range from 2 to 20. When the ratio is 2 or more, excellent water-dispersibility is obtained, and when 20 or less, an aqueous paint containing the resin has excellent water resistance of a coated film and pseudo-plastic flow is exhibited in a lower concentration range. When the ratio is less than 2, the water-dispersibility of the resin may be reduced, and when over 20, an aqueous paint containing such a resin does not easily exhibit pseudo-plastic flow in a lower concentration range and the water resistance of a coated film decreases - More preferably, the lower limit of the number of hydrophilic group/number of the hydrocarbon group is 3 and the upper limit thereof is 10.

For example, when the hydrophilic group is an acidic group and/or a hydroxyl group, it is preferable to calculate the number of the hydrophilic group in terms of the number of acidic groups and hydroxyl groups.

As a typical method for obtaining a desired ratio of the number of hydrophilic group/number of the hydrocarbon group for the resin, there is a method in which the desired ratio is set as a molar ratio of an acidic group-containing ethylenic monomer and a hydroxyl group-containing ethylenic monomer to the above-described hydrocarbon group-containing ethylenic monomer in synthesizing the resin.

In the present invention, the hydrophilic ethylenic monomer preferably has a $\delta$ sp value of 9.0 or more, and the hydrophobic ethylenic monomer preferably has a hydrocarbon group containing 12 to 24 carbon atoms. The anti-sagging and the flow property on the coating surface are improved due to the combination of the above-described hydrophilic ethylenic monomer and hydrophobic ethylenic monomer.

The acid value of the resin is preferably from 10 to 100 mg KOH/g. Within this range, excellent water-dispersibility can be obtained, and further, excellent water resistance can be obtained regarding a coated film formed from an aqueous paint containing such resin. An aqueous paint containing such resin exhibits sufficient pseudo-plastic flow in a lower concentration of resin in an aqueous medium. When the acid value is less than 10 mg KOH/g, the water-dispersibility of the resin may be reduced, and when over 100 mg KOH/g, pseudo-plastic flow is not exhibited in a lower concentration in an aqueous medium, and further, the water resistance of a coated film formed from an aqueous paint containing the resin decreases. More preferably, the lower limit of the acid value is 20 mg KOH/g, and the upper value is 80 mg KOH/g.

When the resin has a hydroxyl group, the hydroxyl value of the hydroxyl group is preferably from 10 to 150 mg KOH/g. Within this range, a coated film having excellent water-dispersibility and having sufficient hardness by cross-linking with a cross-linking agent component in a paint can be obtained and an aqueous paint containing the resin exhibits sufficient pseudo-plastic flow in a lower concentration range. When the hydroxyl value is less than 10 mg KOH/g, the water-dispersibility of the resin may be reduced and a coated film formed from an aqueous paint containing the resin has poor physical property since curing is insufficient. When over 150 mg KOH/g, pseudo-plastic flow is not exhibited in a lower concentration range in an aqueous medium, and further, the water resistance of a coated film decrease. More preferably, the lower limit of the hydroxyl value is 20 mg KOH/g and the upper limit thereof is 130 mg KOH/g.

In the resin in which at least one hydrocarbon group containing 12 to 24 carbon atoms and at least one hydrophilic group are imparted to a carbon chain derived from an ethylenic monomer, the content of the above-described hydrocarbon group is preferably from 20 to 250 mg/g. Within this range, sufficient pseudo-plastic flow is exhibited in a lower concentration in an aqueous medium, dependence of viscosity on concentration is well suppressed, and excellent water-dispersibility is obtained. When the content is less than 20 mg/g, pseudo-plastic flow is not exhibited in a lower concentration. When over 250 mg/g, water-dispersibility may be reduced, and viscosity tends to linearly increase with an increase in concentration. More, preferably, the lower limit of the content of the above-described hydrocarbon group is 50 mg/g, and the upper limit is 150 mg/g.

The number-average molecular weight of a copolymer obtained by carrying out the above-described polymerization is typically from 1000 to 50000, preferably from 2000 to 30000. When the resulting number-average molecular weight is less than 1000, a paint containing the resulting resin may not exhibit pseudo-plastic flow in a lower concentration of the resin, and such molecular weight is not desirable also from the viewpoint of workability and physical property of a paint - On the other hand, when the number-average molecular weight is higher than 50000, the viscosity of dispersion tends to linearly increase with increases in the concentration of the resin in an aqueous dispersion containing the resin.

In a resin in which at least one "hydrocarbon group containing 12 to 24 carbon atoms" and at least one "hydrophilic group" are imparted to a carbon chain derived from the above-described ethylenic monomer, the number average molecular weight is preferably from 2000 to 30000. Within this range, pseudo-plastic flow is exhibited in a lower concentration in an aqueous medium, and dependence of viscosity on concentration in a higher concentration can be reduced. As a result, excellent water-dispersibility can be obtained, and an aqueous paint which is excellent in workability and physical properties of a coated film can be obtained by inclusion of the resin. More preferably, the lower limit of the number-average molecular weight is 3000, and the upper limit is 20000.

For dispersing a resin having an acidic group in an aqueous medium, at least a portion of the acidic groups in the resin can be neutralized with a base. Examples of such a base include amines such as monomethylamine, dimethylamine, trimethylamine, monoethylamine, diethylamine, triethylamine, monoisopropylamine, diisopropylamine, diethylenetriamine, triethylenetetramine, monoethanolamine, diethanolamine, triethanolamine, monoisopropanolamine, diisopropanolamine, dimethylethanolamine, diethylethanolamine, methylpropanolamine, morpholine, methylmorpho-

8

line, piperazine and the like, and inorganic bases such as ammonia, sodium hydroxide, potassium hydroxide, lithium hydroxide and the like.

Such resins can be used in various forms and/or methods. The resin preferably is provided as an aqueous dispersion into an aqueous medium including water.

Further, a cross-linking agent (curing agent) is compounded into the resin to provide a thermosetting aqueous paint. Examples of the cross-linking agent include amino resin, block polyisocyanate and the like.

As the amino resin, for example, known partially or completely methylolated amino resins obtained by reaction of an amino compound such as melamine, urea, benzoguanamine, acetoguanamine, spiroguanamine, dicyandiamide and the like with an aldehyde, and the like are suggested. Also preferable are melamine resins such as a methoxy-melamine resin, butoxy-melamine resin and the like. As the aldehyde, folmaldehyde, p-formaldehyde, acetoaldehyde, benzaldehyde and the like are suggested. Compounds obtained by etherification of these methylolated amino resins partially or completely with suitable alcohol can also be used, and examples of the alcohol used for the etherification include methyl alcohol, ethyl alcohol, n-propyl alcohol, isopropyl alcohol, n-butyl alcohol, isobutyl alcohol, 2-ethylbutanol, 2-ethylhexanol and the like.

A block polyisocyanate can be obtained by reacting a blocking agent with polyisocyanate having two or more free isocyanate groups in one molecule, and when this is heated to decomposition temperature or higher, an isocyanate group is regenerated and this group is subjected to a cross-linking reaction with hydroxyl groups of the above-described resin. As the polyisocyanate compound (isocyanate prepolymer), for example, aliphatic isocyanates such as hexamethylene diisocyanate, trimethylhexamethylene diisocyanate and the like, cyclic aliphatic isocyanates such as isophorone diisocyanate and the like, aromatic isocyanates such as xylylene diisocyanate, tolylene diisocyanate, 4,4'-diphenylmethane diisocyanate and the like, and the like are suggested. As a blocking agent, for example, phenol compounds, lactam compounds, alcohol compounds, oxime compounds and the like are used.

When a paint is prepared using the resin, cellulose acetate, epoxy resins, polyester resins, alkyl resins, acrylic resins and the like can be compounded, as required. Further, the following known components can be included, such as organic solvents (ether-based solvents such as ethylene glycol monomethyl ether, ethylene glycol monoethyl ether, ethylene glycol mono n-butyl ether, ethylene glycol mono n-hexyl ether and the like, alcohol-based solvents such as methanol, ethanol, isopropanol, n-butanol, sec-butanol, isobutanol, t-butanol, n-hexanol and the like, ester-based solvents such as ethyl acetate, n-butyl acetate, isobutyl acetate, methylcellosolve acetate, butylcarbitol acetate and the like), organic pigments (quinacridone-based pigments such as quinacridone and the like, azo-based pigments such as pigment red and the like, phthalocyanine-based pigments such as phthalocyanine blue, phthalocyanine green and the like), inorganic pigments (titanium oxide, barium sulfate, calcium carbonate, clay, barytes, silica, mica and the like), carbon-based pigments (carbon black), metallic powders (aluminum, mica-like iron oxide, stainless steel and the like), surface controlling agents, ultraviolet absorbers, antioxidants, curing catalysts (dodecylbenzenesulfonic acid, p-toluenesulfonic acid, naphthalenesulfonic acid, dibutyl tin diacetate, dibutyl tin dioctate, dibutyl tin dilaurate, triethylamine, diethanolamine and the like), and the like.

A paint containing the resin can be applied directly to an object to be coated such as metal (for example, steel plate, surface treated steel plate and the like), plastic and the like, or can be applied to the surface of a coated film prepared by applying primer, primer/primer surfacer, or primer/primer surfacer/ basecoat. The object to be coated is not particularly restricted. The paint can be applied as a coating for exterior parts such as transportation machines such as automobiles, ships, airplanes and the like, buildings, electric appliances and the like, and in particular, preferably applied as a coating for automobiles and the like for which excellent appearance is required. When used as a paint for automobiles, it can be used, for example, as a basecoat paint (metallic paint or solid color paint) such as 2 coats 1 bake, 2 coats 2 bakes and the like, and a paint for top clear coat, a solid color paint such as 1 coat 1 bake and the like.

The paint can be coated on the surface of an object by spraying-In this case, the coating method is not particularly restricted, and for example, air spray gun, airless spray gun, air atomizing type, or airless atomizing type or rotational atomizing type electrostatic spray equipment and the like may utilized.

The following examples further illustrate the present invention in detail, but do not limit the present invention. In the examples, regarding δ sp values of monomers, as described in the Polymer Handbook Third Edition (J. Brandrup, E. H. Immergut (1989) John Wiley & Sons), the values described are used as they are, and other values are calculated by the molar-volume cohesion technique of Hoy (Journal of Paint Technology, Vol. 42, No. 541, p76 (1970)) in the above-described equation (2).

〈Example 1〉

A reaction vessel equipped with a stirrer, thermostat and reflux condenser was charged with 315 parts by weight of ethylene glycol monomethyl ether, and the temperature of the mixture was kept at 100°C. To this was added a monomer solution composed of 24 parts by weight (6% by weight: based on the total amount of ethylenic monomers, hereinafter the same) of acrylic acid (δ sp: 12.9), 78 parts by weight (20% by weight) of 2-hydroxyethyl acrylate (δ sp:

10.6), and 174 parts by weight (45% by weight) of methyl acrylate ($\delta$ sp: 9.8), and 109 parts by weight (69% by weight) of stearyl acrylate ($\delta$ sp: 7.9) and 3.2 parts by weight of azobisisobutyronitrile over a period of 5 hours. The mixture was then stirred for 1 hour. A resin of 55% by weight and a number-average molecular weight of 4500 were obtained.

〈Example 2〉

A reaction vessel equipped with a stirrer, thermostat and reflux condenser was charged with 315 parts by weight of ethylene glycol monomethyl ether, and the temperature of the mixture was kept at 100°C. To this was added a monomer solution composed of 25 parts by weight (7% by weight) of methacrylic acid ($\delta$ sp: 12.6), 78 parts by weight (20% by weight) of 2-hydroxyethyl methacrylate ($\delta$ sp: 9.9), 180 parts by weight (47% by weight) of methyl methacrylate ($\delta$ sp: 9.3), 102 parts by weight (26% by weight) of stearyl methacrylate ($\delta$ sp: 7.8) and 3.2 parts by weight of azobisisobutyronitrile over a period of 5 hours. The mixture was then stirred for 1 hour. A resin of 55% by weight and a number-average molecular weight of 5000 were obtained.

〈Example 3〉

A reaction vessel equipped with a stirrer, thermostat and reflux condenser was charged with 315 parts by weight of ethylene glycol monomethyl ether, and the temperature of the mixture was kept at 100°C. To this was added a solution composed of 30 parts by weight (8% by weight) of acrylic acid ($\delta$ sp: 12.9), 97 parts by weight (25% by weight) of 2-hydroxyethylacrylate ($\delta$ sp: 10.6), 205 parts by weight (53% by weight) of methyl acrylate ($\delta$ sp: 9.8), 53 parts by weight (14% by weight) of n-butyl acrylate macro-monomer (AB-6 (trade name) manufactured by Toa Gosei Chemical Industry Co., Ltd.; $\delta$ sp: 8.5) and 3.2 parts by weight of azobisisobutyronitrile over a period of 5 hours. The mixture was then stirred for 1 hour. A resin of 55% by weight was obtained.

〈Example 4〉

A reaction vessel equipped with a stirrer, thermostat and reflux condenser was charged with 315 parts by weight of isopropyl alcohol, and the temperature of the mixture was kept at 80°C. To this was added a solution composed of 32 parts by weight (8% by weight) of methacrylic acid ($\delta$ sp: 12.6), 96 parts by weight (25% by weight) of 2-hydroxyethyl methacrylate ($\delta$ sp: 9.9) and 210 parts by weight (55% by weight) of methyl methacrylate ($\delta$ sp: 9.3), and 47 parts by weight (12% by weight) of isobutyl methacrylate macro-monomer (AW-6 (trade name) manufactured by Toa Gosei Chemical Industry Co., Ltd.; $\delta$ sp: 8.1) and 3.2 parts by weight of azobisisobutyronitrile over a period of 5 hours. The mixture was then stirred for 1 hour. A resin of 55% by weight was obtained.

〈Example 5〉

A reaction vessel equipped with a stirrer, thermostat and reflux condenser was charged with 315 parts by weight of isopropyl alcohol, and the temperature of the mixture was kept at 80°C. To this was added a solution composed of 30 parts by weight (8% by weight) of methacrylic acid ($\delta$ sp: 12.6), 95 parts by weight (24% by weight) of 2-hydroxyethyl methacrylate ($\delta$ sp: 9.9) and 210 parts by weight (55% by weight) of methyl methacrylate ($\delta$ sp: 9.3), 50 parts by weight (13% by weight) of n-butyl polyacrylate macro-monomer (AB-6 described above; $\delta$ sp: 8.5) and 3.2 parts by weight of azobisisobutyronitrile over a period of 5 hours. The mixture was then stirred for 1 hour. A resin of 55% by weight was obtained.

〈Comparative Example 1〉

A reaction vessel equipped with a stirrer, thermostat and reflux condenser was charged with 315 parts by weight of ethylene glycol monomethyl ether, and the temperature of the mixture was kept at 100°C. To this was added a monomer solution composed of 30 parts by weight (8% by weight) of acrylic acid ($\delta$ sp: 12.9), 98 parts by weight (25% by weight) of 2-hydroxyethyl acrylate ($\delta$ sp: 10.6), 257 parts by weight (67% by weight) of methyl acrylate ($\delta$ sp: 9.8) and 3.2 parts by weight of azobisisobutyronitrile over a period of 5 hours. The mixture was then stirred for 1 hour. A resin of 55% by weight and a number-average molecular weight of 4800 were obtained.

〈Comparative Example 2〉

A reaction vessel equipped with a stirrer, thermostat and reflux condenser was charged with 315 parts by weight of ethylene glycol monobutyl ether, and the temperature of the mixture was kept at 120°C. To this was added a monomer solution composed of 109 parts by weight (28% by weight) of n-butyl acrylate ($\delta$ sp: 8.5), 276 parts by weight (72% by weight) of stearyl acrylate (δ sp: 7.9) and 3.2 parts by weight of azobisisobutyronitrile over a period of 5 hours. The mixture was then stirred for 1 hour. A resin of 55% by weight and a number-average molecular weight of 5500 were obtained.

〈Comparative Example 3〉

A reaction vessel equipped with a stirrer, thermostat and reflux condenser was charged with 315 parts by weight of ethylene glycol monomethyl ether, and the temperature of the mixture was kept at 100°C. To this was added a solution composed of 56 parts by weight (14% by weight) of acrylic acid (δ sp: 12.9) and 172 parts by weight (45% by weight) of 2-hydroxyethyl acrylate (δ sp: 10.6), and 157 parts by weight (41% by weight) of methyl methacrylate macro-monomer (AA-6 (trade name) manufactured by Toa Gosei Chemical Industry Co., Ltd.; δ sp: 9.3) and 3.2 parts by weight of azobisisobutyronitrile over a period of 5 hours. The mixture was then stirred for 1 hour. A resin of 55% by weight was obtained.

〈Comparative Example 4〉

A reaction vessel equipped with a stirrer, thermostat and reflux condenser was charged with 315 parts by weight of ethylene glycol monobutyl ether, and the temperature of the mixture was kept at 120°C. To this was added a solution composed of 208 parts by weight (54% by weight) of n-butyl methacrylate (δ sp: 8.3), and 177 parts by weight (46% by weight) of n-butyl acrylate macro-monomer (AB-6 described above; δ sp: 8.5) and 3.2 parts by weight of azobisisobutyronitrile over a period of 5 hours. The mixture was then stirred for 1 hour. A resin of 55% by weight was obtained.

〈Example 6〉

(Evaluation of water-dispersibility of each resin and viscosity of dispersions containing those resins)

Water-dispersibility when the resins obtained in the above-described Examples, respectively, are dispersed in water and viscosity of dispersions containing those resins was compared with water-dispersibility when the known resins obtained in the above-described comparative examples, respectively, are dispersed in water and viscosity of dispersions containing those resins.

Resin dispersions containing the resin obtained in Examples 1 through 5 and the known resins obtained in Comparative Examples 1 through 4, respectively, were prepared, and neutralized with dimethylethanolamine equivalently to acid groups. The resulting dispersions were diluted with water to prepare resin dispersions of 25% by weight, respectively. Then, the water-dispersibility and viscosity of the resulting dispersions were evaluated. For evaluating water-dispersibility, each dispersion of 25% by weight was allowed to set after preparation, and the presence of precipitation was recognized visually. Regarding dispersions having excellent water-dispersibility, then, dependence of viscosity of the dispersions on shear rate was measured using a rotation type rheometer, and if each dispersion exhibited pseudo-plastic flow or Newtonian flow as viscosity behavior thereof was judged. The results are shown in Tables 1 and 2.

Table 1

|  | Resin obtained in Example 1 | Resin obtained in Example 2 | Resin obtained in Comparative Example 1 | Resin obtained in Comparative Example 2 |
|---|---|---|---|---|
| Dispersibility | ○ | ○ | ○ | X |
| Viscosity behavior | Pseudo-plastic flow | Pseudo-plastic flow | Newtonian flow | - |

Table 2

| | Resin obtained in Example 3 | Resin obtained in Example 4 | Resin obtained in Example 5 | Resin obtained in Comparative Example 3 | Resin obtained in Comparative Example 4 |
|---|---|---|---|---|---|
| Dispersibility | ◯ | ◯ | ◯ | ◯ | X |
| Viscosity behavior | Pseudo-plastic flow | Pseudo-plastic flow | Weak pseudo-plastic flow | Newtonian flow | - |

As apparent also from Tables 1 and 2, in each dispersion containing the resins of Examples 1 through 5 in concentration of 25% by weight, no precipitation was recognized after setting and dispersibility of all of these resin dispersions was excellent (shown by ◯ in Tables 1 and 2). Further, these resin dispersions exhibited typical pseudo-plastic flow in which apparent viscosity reduces with increases in shear rate.

On the other hand, regarding the solutions in which the resins obtained in each of the above-described Comparative Example were dispersed in water so that the content thereof was 25% by weight, in solutions containing resins obtained in any of Comparative Examples 1 and 3, no problem was recognized in dispersibility; however, in solutions containing the resins obtained in Comparative Examples 2 and 4, apparent precipitation was recognized and dispersibility was poor (shown by X in Tables 1 and 2). The resin dispersions containing resins obtained in Comparative Examples 1 and 3 exhibited viscosity Newtonian flow behavior, and did not exhibit pseudo-plastic flow as observed in the above-described respective dispersions containing the resins of Examples 1 through 5.

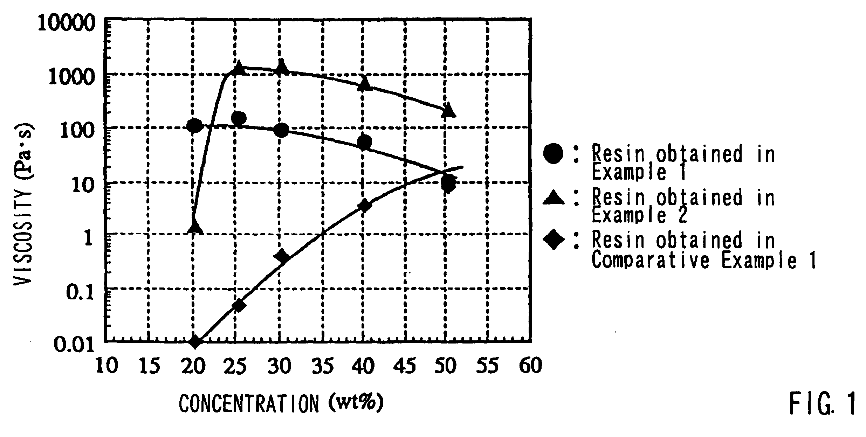

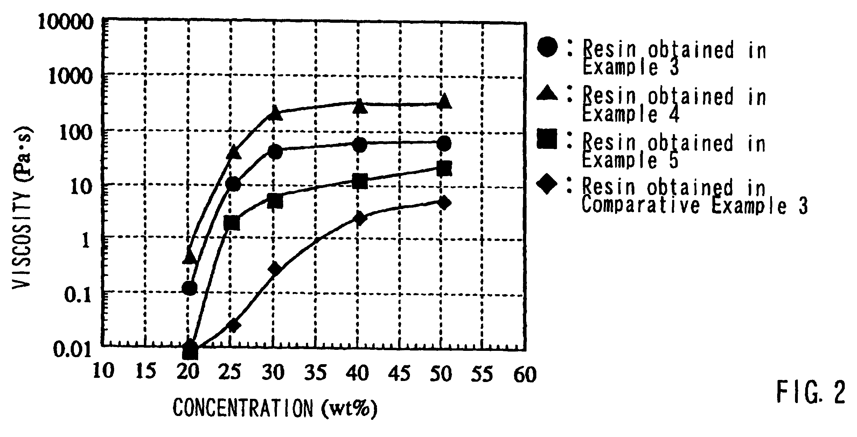

Then, resin dispersions of 20% by weight, 25% by weight, 30% by weight, 40% by weight and 50% by weight obtained in Examples 1 through 5 and Comparative Examples 1 and 3 were prepared, respectively. Viscosity at a shear rate of $1 \times 10^{-1}s^{-1}$ was measured, and change in viscosity with variation of concentration of dispersions containing resins was measured. The relations between concentrations and viscosity are shown in FIGS. 1 and 2. In FIG. 1, black circle mark, black triangle mark and black rhomboid mark, respectively, show the results of dispersions containing the resins in Examples 1 and 2 and Comparative Example 1, and in FIG. 2, black circle mark, black triangle mark, black square mark and black rhomboid mark, respectively, show the results of dispersions containing the resin compositions in Examples 3 through 5 and Comparative Example 3.

In the dispersion containing the resin obtained in Example 2, in a concentration range of 25 to 50% by weight, excellent viscosity level can be secured in which sagging does not readily occur in coating on a vertical surface and the viscosity level was kept by which excellent flow property on the coated surface could be maintained (in FIG. 1). In the dispersion containing the resin obtained in Example 1, excellent viscosity level can be secured in which sagging does not readily occur in coating on a vertical surface and viscosity level was kept by which excellent flow property on the coated surface could be maintained in such a wide concentration range of 20 to 50% by weight (in FIG. 1).

In the all dispersions containing the resins obtained in Examples 3 through 5 in a concentration range of 30 to 50% by weight, such level viscosity can be secured that sagging does not occur even in coating on a vertical surface and viscosity level was kept by which excellent flow property on the coated surface could be maintained (in FIG. 2). Particularly, in the dispersions containing the resins obtained in any of Examples 3 and 4, flow property was excellent. That is, according to the dispersions containing these resins, viscosity of the dispersion can be maintained at approximately a constant level against variation in concentration in the above-described concentration range (in FIG. 2).

In comparison, in the dispersions containing the resins obtained in Comparative Examples 1 and 3, a tendency for linear increases in viscosity with an increase of concentration was recognized, and in addition, viscosity level required in coating of a vertical surface cannot be secured in a concentration range of 20 to 40% and 20 to 50% for Comparative Examples 1 and 3, respectively. This means that in the dispersions containing known resins as obtained in the Comparative Examples, variation in viscosity of the dispersion according to variation of the concentration of the resin contained is remarkable.

〈Example 7〉

(Evaluation of appearance)

To the aqueous dispersions of 25% by weight used in the above-described Example 6 were added as a curing agent "Simel 325 (trade mark)" (methoxyiminomelamine), manufactured by Mitsui Sitech Co., Ltd. in appropriate amounts and the mixture was mixed uniformly to prepare paints from the above-described dispersions. Appearance was evaluated as described below, using the resulted paints.

12

That is, the resulted paints were applied by air spray gun on a primer surfacer coated steel plate so that the thickness of a coated film on the plate when dried was 20 μm. Anti-sagging and flow property (orange peel) of the sprayed paint was evaluated as a parameter of appearance. Further, baking at 140°C for 30 minutes was conducted for the steel plate which had been coated in a drying apparatus, and the appearance of the coated surface was evaluated. The evaluation results are summarized in Tables 3 and 4.

## Table 3

| | | Resin obtained in Example 1 | Resin obtained in Example 2 | Resin obtained in Comparative Example 1 |
|---|---|---|---|---|
| Coating property | Anti-Sagging | ◎ | ◎ | × |
| | Flow property (Orange peel) | ○ | ○ | ○ |
| Appearance | | ○ | ○ | × |

## Table 4

| | | Resin obtained in Example 3 | Resin obtained in Example 4 | Resin obtained in Example 5 | Resin obtained in Comparative Example 3 |
|---|---|---|---|---|---|
| Coating property | Anti-Sagging | ◎ | ◎ | ○ | × |
| | Flow property (Orange peel) | ◎ | ◎ | ○ | ○ |
| Appearance | | ◎ | ◎ | ○ | × |

As apparent from Tables 3 and 4, regarding the paints containing the resins obtained in Examples 1 through 5, any of the coating properties (anti-sagging, flow property) and the appearance of the coated surface after baking was excellent (shown by ○ in Tables 3 and 4). Among others, the paints containing the resins obtained in Examples 1, 2, 3 and 4 were particularly excellent (shown by ◎ in Tables 3 and 4). This shows that in a paint containing the resin composition of the present invention, pseudo-plastic flow is exhibited in spraying process, and the viscosity of the paint can be maintained at approximately constant level against variation (increase) in concentration in drying process. That is, sagging is prevented and surface smoothness is excellent (no orange peel detected). As a result, excellent surfaces of coated film can be formed.

In comparison, regarding the paints containing the known resins obtained in Comparative Examples 1 and 3, sagging occurred in the coated film surface (shown by X in Tables 3 and 4). Therefore, in these paints , the appearance of the coated surface after baking was also poor (shown by X in Tables 3 and 4).

Moreover, several suitable Examples regarding the resin for a paint in which at least one hydrocarbon group containing 12 to 24 carbon atoms and at least one hydrophilic group are imparted to a carbon chain derived from an ethylenic monomer are described below.

〈 Example 8〉

A reaction vessel equipped with a stirrer, thermostat and reflux condenser was charged with 82 parts by weight of isopropyl alcohol, and the temperature of the mixture was raised to 80°C after purging with nitrogen. To this was added a monomer solution composed of 12 parts by weight (0.05 mol) of stearyl acrylate (δ sp: 7.9), 5 parts by weight (0.1 mol) of acrylic acid (δ sp: 12.9), 17 parts by weight (0.2 mol) of 2-hydroxyethyl acrylate (δ sp: 10.6), 66 parts by weight (0.65 mol) of n-butyl methacrylate ( δ sp: 8.3) and 0.8 parts by weight of azobisisobutyronitrile over a period of 5 hours. The mixture was then stirred for 1 hour. A resin having a number-average molecular weight of 8000, an acid value of 40 mg KOH/g, a hydroxyl value of 80 mg KOH/g, a content of a hydrocarbon group having 18 carbon atoms of 91 mg/g, and a number ratio (a)/(b) of (a) hydrophilic groups (carboxyl group and hydroxyl group) to (b) the hydrocarbon group (stearyl group) of 6 was obtained. The solvent was removed from this resin solution by an evaporator until the concentration of the resin reached 80% by weight. Then, to this was added 6 parts by weight of dimethylethanolamine and 36 parts by weight of deionized water. A resin dispersion for a paint having a concentration of 60% by weight was obtained.

〈Example 9〉

A reaction vessel equipped with a stirrer, thermostat and reflux condenser was charged with 82 parts by weight of isopropyl alcohol, and the temperature of the mixture was raised to 80°C after purging with nitrogen. To this was added a monomer solution composed of 12 parts by weight (0.05 mol) of stearyl acrylate ($\delta$ sp: 7.9), 7 parts by weight (0.1 mol) of methacrylic acid ($\delta$ sp: 12.6), 19 parts by weight (0.2 mol) of 2-hydroxyethylmethacrylate ($\delta$ sp: 9.9), 62 parts by weight (0.65 mol) of n-butyl acrylate ($\delta$ sp: 8.5) and 0.8 parts by weight of azobisisobutyronitrile over a period of 5 hours. The mixture was then stirred for 1 hour. A resin having a number-average molecular weight of 8500, an acid value of 42 mg KOH/g, a hydroxyl value of 84 mg KOH/g, a content of a hydrocarbon group having 18 carbon atoms of 94 mg/g, and a number ratio (a)/(b) of (a) hydrophilic groups (carboxyl group and hydroxyl group) to (b) the hydrocarbon group (stearyl group) of 6 was obtained. The solvent was removed from this resin solution by an evaporator until the concentration of the resin reached 80% by weight. Then, to this was added 6 parts by weight of dimethylethanolamine and 36 parts by weight of deionised water. A resin dispersion for a paint having a concentration of 60% by weight was obtained.

〈Example 10〉

A reaction vessel equipped with a stirrer, thermostat and reflux condenser was charged with 82 parts by weight of ethyleneglycolmonomethyl ether, and the temperature of the mixture was raised to 80°C after purging with nitrogen. To this was added a monomer solution composed of 9 parts by weight (0.05 mol) of lauryl acrylate ($\delta$ sp: 8.0), 5 parts by weight (0.1 mol) of acrylic acid ($\delta$ sp: 12.9), 17 parts by weight (0.2 mol) of 2-hydroxyethyl acrylate ($\delta$ sp: 10.6), 69 parts by weight (0.65 mol) of n-butyl methacrylate ($\delta$ sp: 8.3) and 0.8 parts by weight of azobisisobutyronitrile over a period of 5 hours. The mixture was then stirred for 1 hour. A resin having a number-average molecular weight of 8400, an acid value of 42 mg KOH/g, a hydroxyl value of 84 mg KOH/g, a content of a hydrocarbon group having 12 carbon atoms of 63 mg/g, and a number ratio (a)/(b) of (a) hydrophilic groups (carboxyl group and hydroxyl group) to (b) the hydrocarbon group (lauryl group) of 6 was obtained. The solvent was removed from this resin solution by an evaporator until the concentration reached 80% by weight. Then, to this was added 6 parts by weight of methylpropanolamine and 36 parts by weight of deionized water. A resin dispersion for a paint having a concentration of 60% by weight was obtained.

〈Example 11〉

A reaction vessel equipped with a stirrer, thermostat and reflux condenser was charged with 82 parts by weight of isopropyl alcohol, and the temperature of the mixture was raised to 80°C after purging with nitrogen. To this was added a monomer solution composed of 11 parts by weight (0.05 mol) of cetyl acrylate ($\delta$ sp: 7.9), 5 parts by weight (0.1 mol) of acrylic acid ($\delta$ sp: 12.9), 17 parts by weight (0.2 mol) of 2-hydroxyethyl acrylate ($\delta$ sp: 10.6), 67 parts by weight (0.65 mol) of n-butyl methacrylate ($\delta$ sp: 8.3) and 0.8 parts by weight of azobisisobutyronitrile over a period of 5 hours. The mixture was then stirred for 1 hour. A resin having a number-average molecular weight of 8400, an acid value of 41 mg KOH/g, a hydroxyl value of 82 mg KOH/g, a content of a hydrocarbon group having 16 carbon atoms of 82 mg/g, and a number ratio (a)/(b) of (a) hydrophilic groups (carboxyl group and hydroxyl group) to (b) the hydrocarbon group (cetyl group) of 6 was obtained. The solvent was removed from this resin solution by an evaporator until the concentration of the resin reached 80% by weight. Then, to this was added 6 parts by weight of dimethylethanolamine and 36 parts by weight of deionized water. A resin dispersion for a paint having a concentration of 60% by weight was obtained.

〈Example 12〉

A reaction vessel equipped with a stirrer, thermostat and reflux condenser was charged with 82 parts by weight of ethyleneglycolmonomethyl ether, and the temperature of the mixture was raised to 80°C after purging with nitrogen. To this was added a monomer solution composed of 16 parts by weight (0.05 mol) of stearyl acrylate ($\delta$ sp: 7.9), 7 parts by weight (0.1 mol) of acrylic acid ($\delta$ sp: 12.9), 23 parts by weight (0.2 mol) of 2-hydroxyethyl acrylate ($\delta$ sp: 10.6), 54 parts by weight (0.65 mol) of methyl acrylate ($\delta$ sp: 9.8) and 0.8 parts by weight of azobisisobutyronitrile over a period of 5 hours. The mixture was then stirred for 1 hour. A resin having a number-average molecular weight of 7600, an acid value of 55 mg KOH/g, a hydroxyl value of 110 mg KOH/g, a content of a hydrocarbon group having 18 carbon atoms of 124 mg/g, and a number ratio (a)/(b) of (a) hydrophilic groups (carboxyl group and hydroxyl group) to (b) the hydrocarbon group (stearyl group) of 6 was obtained. The solvent was removed from this resin solution by an evaporator until the concentration of the resin reached 80% by weight. Then, to this was added 6 parts by weight of methylpropanolamine and 36 parts by weight of deionized water. A resin dispersion for a paint having a concentration of 60% by weight was obtained.

〈Example 13〉

A reaction vessel equipped with a stirrer, thermostat and reflux condenser was charged with 82 parts by weight of isopropyl alcohol, and the temperature of the mixture was raised to 80°C after purging with nitrogen. To this was added a monomer solution composed of 40 parts by weight (0.2 mol) of stearyl acrylate ($\delta$ sp: 7.9), 5 parts by weight (0.1 mol) of metnacrylic acid ($\delta$ sp: 12.6), 16 parts by weight (0.2 mol) of 2-hydroxyethylmethacrylate ($\delta$ sp: 9.9), 39 parts by weight (0.6 mol) of n-butyl acrylate ($\delta$ sp: 8.5) and 0.8 parts by weight of azobisisobutyronitrile over a period of 5 hours. The mixture was then stirred for 1 hour. A resin having a number-average molecular weight of 8200, an acid value of 34 mg KOH/g, a hydroxyl value of 68 mg KOH/g, a content of a hydrocarbon group having 18 carbon atoms of 311 mg/g, and a number ratio (a)/(b) of (a) hydrophilic groups (carboxyl group and hydroxyl group) to (b) the hydrocarbon group (stearyl group) of 1.5 was obtained. The solvent was removed from this resin solution by an evaporator until the concentration of the resin reached 80% by weight. Then, to this was added 6 parts by weight of dimethylethanolamine and 36 parts by weight of deionized water. A resin dispersion for a paint having a concentration of 60% by weight was obtained.

〈Example 14〉

A reaction vessel equipped with a stirrer, thermostat and reflux condenser was charged with 82 parts by weight of isopropyl alcohol, and the temperature of the mixture was raised to 80°C after purging with nitrogen. To this was added a monomer solution composed of 5 parts by weight (0.02 mol) of stearyl acrylate ($\delta$ sp: 7.9), 21 parts by weight (0.3 mol) of methacrylic acid ($\delta$ sp: 12.6), 40 parts by weight (0.4 mol) of 2-hydroxyethylmethacrylate ($\delta$ sp: 9.9), 34 parts by weight (0.28 mol) of n-butyl acrylate ($\delta$ sp: 8.5) and 0.8 parts by weight of azobisisobutyronitrile over a period of 5 hours. The mixture was then stirred for 1 hour. A resin having a number-average molecular weight of 8200, an acid value of 134 mg KOH/g, a hydroxyl value of 179 mg KOH/g, a content of a hydrocarbon group having 18 carbon atoms of 40 mg/g, and a number ratio (a)/(b) of (a) hydrophilic groups (carboxyl group and hydroxyl group) to (b) the hydrocarbon group (stearyl group) of 35 was obtained. The solvent was removed from this resin solution by an evaporator until the concentration of the resin reached 80% by weight. Then, to this was added 6 parts by weight of dimethylethanolamine and 36 parts by weight of deionized water. A resin dispersion for a paint having a concentration of 60% by weight was obtained.

〈Comparative Example 5〉

A reaction vessel equipped with a stirrer, thermostat and reflux condenser was charged with 82 parts by weight of isopropyl alcohol, and the temperature of the mixture was raised to 80°C after purging with nitrogen. To this was added a monomer solution composed of 22 parts by weight (0.1 mol) of stearyl acrylate ($\delta$ sp: 7.9), 78 parts by weight (0.9 mol) of n-butyl methacrylate ($\delta$ sp: 8.5) and 0.8 parts by weight of azobisisobutyronitrile over a period of 5 hours. The mixture was then stirred for 1 hour. A resin having a number-average molecular weight of 8200, a content of a hydrocarbon group having 18 carbon atoms of 161 mg/g, and no hydrophilic groups (carboxyl group and hydroxyl group) were contained in the resin. The solvent was removed from this resin solution by an evaporator until the concentration of the resin reached 80% by weight. Then, to this was added 42 parts by weight of deionized water. A resin dispersion for a paint having a concentration of 60% by weight was obtained.

〈Comparative Example 6〉

A reaction vessel equipped with a stirrer, thermostat and reflux condenser was charged with 82 parts by weight of isopropyl alcohol, and the temperature of the mixture was raised to 80°C after purging with nitrogen. To this was added a monomer solution composed of 8 parts by weight (0.1 mol) of acrylic acid ($\delta$ sp: 12.9), 26 parts by weight (0.2 mol) of 2-hydroxyethyl methacrylate ($\delta$ sp: 9.9), 66 parts by weight (0.28 mol) of methyl acrylate ($\delta$ sp: 9.8) and 0.8 parts by weight of azobisisobutyronitrile over a period of 5 hours. The mixture was then stirred for 1 hour. A resin having a number-average molecular weight of 8400, an acid value of 62 mg KOH/g, and a hydroxyl value of 124 mg KOH/g.

The solvent was removed from this resin solution by an evaporator until the concentration of the resin reached 80% by weight. Then, to this was added 6 parts by weight of dimethylethanolamine and 36 parts by weight of deionized water. A resin dispersion for a paint having a concentration of 60% by weight was obtained.

〈Example 15〉

-Evaluation of viscosity of dispersion-

The resin dispersions for paint having a concentration of 60% by weight prepared in Examples 8 through 14 and Comparative Examples 5 and 6 were diluted with water, respectively, to 25% by weight, allowed to set, and the presence of precipitation was recognized visually to evaluate dispersibility. When dispersibillty was excellent, dependence of viscosity on shear rate was measured by a rotation type viscometer to investigate viscosity behavior (pseudo-plastic flow or Newtonian flow). These results are shown in Table 5.

## Table 5

|  | Resin obtained in Example 8 | Resin obtained in Example 9 | Resin obtained in Example 10 | Resin obtained in Example 11 | Resin obtained in Example 12 |
|---|---|---|---|---|---|
| dispersibility | ○ | ○ | ○ | ○ | ○ |
| viscosity behavior | Pseudo-plastic flow | Pseudo-plastic flow | Pseudo-plastic flow | Pseudo-plastic flow | Pseudo-plastic flow |

| Resin obtained in Example 13 | Resin obtained in Example 14 | Resin obtained in Comparative Example 5 | Resin obtained in Comparative Example 6 |
|---|---|---|---|
| ○ | ○ | × | ○ |
| Pseudo-plastic flow | Weak pseudo-plastic flow | — | Newtonian flow |

As apparent also from Table 5, in the dispersions containing the resins of Examples 8-14, no precipitation was recognized at all after setting and dispersibility of all of the dispersions was excellent (shown by ○ in Table 5). Further, these dispersions exhibited typical pseudo-plastic flow in which viscosity reduces with increases in shear rate.

On the other hand, in the dispersion containing the resin obtained in Comparative Example 5, apparent precipitation was recognized, namely, dispersibility was poor (shown by X in Table 5). The aqueous resin dispersions containing resins obtained in Comparative Example 6 exhibited excellent dispersibility (○ in Table 5); however, the dispersion containing the resin obtained in Comparative Example 6 exhibited Newtonian flow.

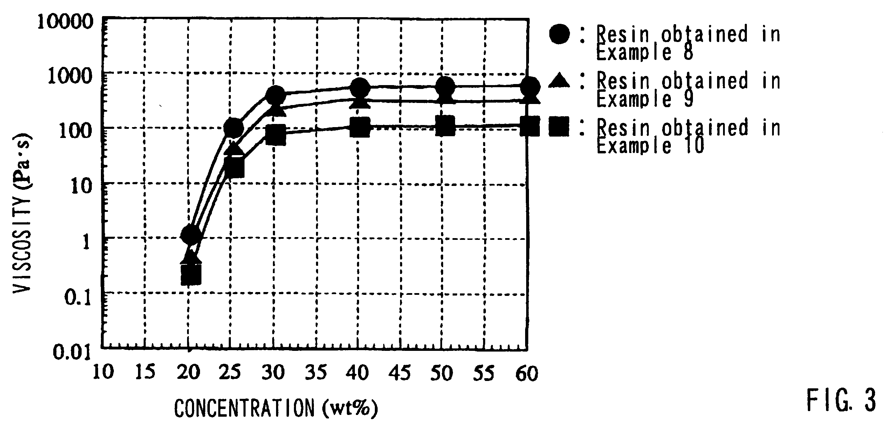

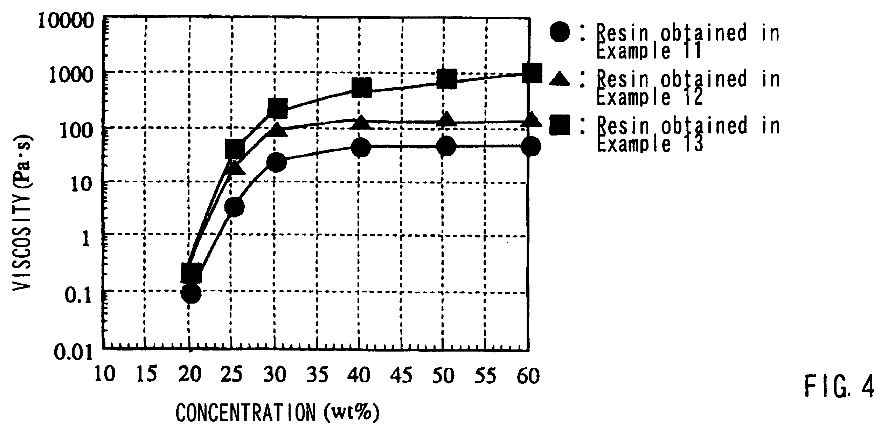

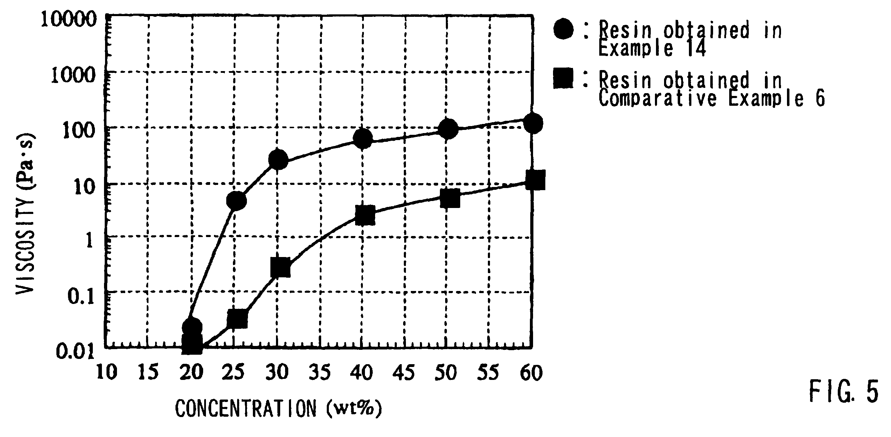

Then, the resin dispersions for a paint having a concentration of 60% by weight prepared in Examples 8 through 14 and Comparative Example 6 were diluted with deionized water to 20 to 50% by weight, viscosity at a shear rate of $1 \times 10^{-1} s^{-1}$ was evaluated, and any change in viscosity with variation of the concentration of each resin dispersion was evaluated. The relations between concentrations and viscosity are shown in FIGS. 3 through 5. In FIG. 3, circle mark, triangle mark and square mark, respectively, show the results of the resin dispersions of Examples 8 through 10, in FIG. 4, circle mark, triangle mark and square mark, respectively, show the results of the resin dispersions of Examples 11 through 13, and in FIG. 5, circle mark, and square mark, respectively, show the results of the resin dispersions of Example 14 and Comparative Example 6.

As apparent from these figures, in all of the resin dispersions of Examples 8 through 14, in a concentration range of 30 to 60% by weight, such level viscosity can be secured so that sagging does not occur even in coating on a vertical surface, and viscosity level was kept by which excellent flow property on the coated surface could be maintained. Particularly, in all of the resin dispersions of Examples 8 through 12, viscosity did not increase even when concentration increased to a concentration of 30 to 60% by weight and flow property was particularly excellent. That is, according to the aqueous dispersion containing such resins, viscosity of the dispersion can be maintained at approximately a constant level against variation in concentration in the above-described concentration range.

In comparison, in the resin dispersion obtained in the above-described Comparative Example 6, viscosity level at which sagging does not occur in coating of a vertical surface can not be secured, and in addition, tendency of linear increases in viscosity with increases of concentration was recognized in a concentration range of 20 to 50% by weight.

This means that in the dispersions containing known resins as obtained in Comparative Example 6, variation in viscosity of the dispersion with variation of concentration is remarkable.

〈Example 16〉

(Evaluation of appearance)

Then, the resin dispersions for a paint having a concentration of 60% by weight prepared in Eagles 8 through 14 and Comparative Examples 7 and 8 were diluted with water, respectively, to 25% by weight - Methoxyimino melamine (Simel 325, manufactured by Mitsui Sitech Co., Ltd.) was added as a curing agent in a proportion of 30% by weight based on the above-described resin solid components, and the mixtures were mixed uniformly to prepare aqueous paint varnishes. Those aqueous paint varnishes were applied by an air spray gun on steel plates on which electrodeposition coating and primer surfacer were performed so that the dried coated films had a thickness of 20 micrometers, and appearance was evaluated. Then, the coated plates were baked in a drying apparatus at 140°C for 30 minutes before evaluation of the appearance. The results are shown in Table 6.

### Table 6

| | | Example 8 | Example 9 | Example 10 | Example 11 | Example 12 | Example 13 | Example 14 | Comparative Example 6 |
|---|---|---|---|---|---|---|---|---|---|
| Coating property | Anti-sagging | ◉ | ◉ | ◉ | ◉ | ◉ | ◉ | ○ | × |
| | Flow property (Orange peel) | ◉ | ◉ | ◉ | ◉ | ◉ | ○ | ○ | ○ |
| Appearance | | ◉ | ◉ | ◉ | ◉ | ◉ | ○ | ○ | × |

As apparent from Table 6, regarding the paints containing the resins obtained in any of Examples 8 through 14, both appearance (anti-sagging, flow property) and the appearance of the coated surface after baking were excellent (shown by ○ in Table 6).

In particular, regarding the paints containing the resins obtained in any of Examples 8 through 12 , the appearance of the coated surface after baking was particularly excellent due to anti-sagging and flow property being excellent (shown by ◉ in Table 6).

This is because, in a paint containing such resin, pseudo-plastic flow is exhibited in spray process, and the viscosity of the paint can be maintained at constant level against increases in concentration of a paint in drying process. That is, in a paint containing such resins, sagging is prevented and surface smoothness is excellent (no orange peel detected). As a result, excellent surfaces of coated film can be formed.

In comparison, regarding paint containing the resin obtained In Comparative Example 6, sagging occurred from the coated surface (X in Table 6). Therefore, in these paints, the appearance of the coated surface after baking was also poor (shown by X in Table 6).

〈Example 17〉

(Evaluation of water resistance of coated film)

The resin dispersions for a paint prepared in Examples 8, 9 and 12 were mixed with a curing agent to prepare aqueous paint varnishes in the same manner as Examples 1 and 6. Those aqueous paint varnishes were applied by an air spray gun to steel plates on which electrodeposition coating and primer surfacer coating were performed so that the dried coated films had a thickness of 20 micrometers, and the coated plates were baked in an oven at 140°C for 30 minutes to form coated films. These coated films were immersed in water (40°C) for 30 days before evaluating for blistering. The results are shown in Table 7.

Table 7

|  | Resin obtained in Example 8 | Resin obtained in Example 9 | Resin obtained in Example 12 |
|---|---|---|---|
| Water resistance of coated film | ◎ | ◎ | ○ |

As apparent from Table 7, regarding paints containing the resins obtained in any of Examples 8, 9 and 12, no remarkable blistering was recognized in appearance (○ in Table 7). In particular, regarding paints containing the resins obtained in both Examples 8 and 9, blistering was not recognized at all and water resistance of the coated film was particularly excellent (◎ in Table 7).

## Claims

1.   A composition of matter comprising a copolymer of at least one hydrophilic ethylenic monomer and at least one hydrophobic ethylenic monomer.

2.   The composition according to claim 1, wherein at least one of said hydrophilic ethylenic monomer(s) has a solubility parameter value ($\delta$sp value) of 9.0 or more and the maximum $\delta$sp value of at least one of said hydrophobic ethylenic monomer(s) is lower than the minimum $\delta$sp value of at least one of said hydrophilic ethylenic monomer(s) by 1.0 or more.

3.   The composition according to claim 1 or claim 2, wherein said hydrophilic ethylenic monomer is contained in an amount in the range of from 10 to 99 % by weight, based on the total amount of raw materials to be copolymerized, and said hydrophobic ethylenic monomer is contained in an amount in the range of from 90 to 1 % by weight, based on the total amount of raw materials to be copolymerized.

4.   The composition according to any of the claims 1 to 3, wherein the number average molecular weight of said copolymer is in the range of from 1,000 to 50,000.

5.   The composition according to any of the claims 1 to 4, wherein said hydrophobic ethylenic monomer has a hydrocarbon group having 12 to 24 carbon atoms.

6.   The composition according to claim 5, wherein said hydrophilic ethylenic monomer has at least one acidic group or at least one hydroxyl group.

7.   The composition according to any of the claims 5 and 6 comprising a copolymer of said hydrophilic ethylenic monomers, at least one of said hydrophobic ethylenic monomers having a hydrocarbon group containing 12 to 24 carbon atoms and at least one other hydrophobic ethylenic monomer other than said hydrophobic ethylenic monomer(s), wherein said hydrophilic ethylenic monomers comprise at least one hydrophilic ethylenic monomer having at least one acidic group and at least one hydrophilic ethylenic monomer having at least one hydroxyl group.

8.   The composition according claims 7, wherein said hydrophilic ethylenic monomer having at least one acidic group is contained in an amount in the range of from 2 to 15 % by weight, said hydrophilic ethylenic monomer having at least one hydroxyl group is contained in an amount in the range of from 5 to 30 % by weight, said hydrophobic ethylenic monomer having at least one hydrocarbon group having 12 to 24 carbon atoms is contained in an amount in the range of from 1 to 20 % by weight, all amounts being based on the total amount of raw materials to be copolymerized, and the balance of raw materials to be copolymerized is said at least one other hydrophobic ethylenic monomer.

9. The composition according to any of the claims 1 to 4, wherein said hydrophilic ethylenic monomer has a solubility parameter value ($\delta$sp value) of 9.0 or more and said hydrophobic ethylenic monomer has a hydrocarbon group having 12 to 24 carbon atoms.

10. The composition according to any of the claims 1 to 4, wherein said ethylenic monomer has at least one hydrocarbon group containing 12 to 24 carbon atoms and at least one hydrophilic group.

11. The composition according to claim 10, wherein the ratio of said hydrophilic group/ said hydrocarbon group is from 2 to 20.

12. The composition according to claim 10 or claim 11, wherein the content of said hydrocarbon group is in the range of from 20 to 250 mg/g, preferably in the range of from 50 to 150 mg/g.

13. The composition according to any of the claims 1 to 12, wherein the copolymer is dispersed in an aqueous medium.

FIG. 1

FIG. 2

● : Resin obtained in Example 3

▲ : Resin obtained in Example 4

■ : Resin obtained in Example 5

◆ : Resin obtained in Comparative Example 3

EP 0 906 925 A2

FIG. 3

EP 0 906 925 A2

FIG. 4

EP 0 906 925 A2

FIG. 5